# EUROPÄISCHE PATENTSCHRIFT

(11) **EP 3 601 160 B1**
(45) Veröffentlichungstag und Bekanntmachung des Hinweises auf die Patenterteilung: **17.02.2021**
(21) Anmeldenummer: 18715570.0
(22) Anmeldetag: 26.03.2018
(51) Int. Cl.: C01B 25/37, C01B 25/26, C01B 25/42, C01B 25/44, C01B 25/45, C01G 49/00

(54) **VERFAHREN ZUR HERSTELLUNG VON FE(II)P / FE(II)METP-VERBINDUNGEN**
METHOD FOR THE PREPARATION OF FE(II)P / FE(II)METP COMPOUNDS
PROCÉDÉ DE PRODUCTION DE COMPOSÉS FE(II)P/FE(II)METP

(30) Priorität: 30.03.2017 DE 102017106912
(43) Veröffentlichungstag der Anmeldung: 05.02.2020
(73) Patentinhaber: Chemische Fabrik Budenheim KG, 55253 Budenheim (DE)
(72) Erfinder: ADOLF, Joachim, 55131 Mainz (DE); BRAUN, Dominik, 63225 Langen (DE); EICH, Gerhard, 55218 Ingelheim (DE); ENGERS, David, 55257 Budenheim (DE); EWALD, Bastian, 55278 Uelversheim (DE); LITTERSCHEID, Christian, 55270 Ober-Olm (DE); WISSEMBORSKI, Rüdiger, 16816 Neuruppin (DE)
(74) Vertreter: WSL Patentanwälte Partnerschaft mbB
(86) Internationale Anmeldenummer: PCT/EP2018/057660
(87) Internationale Veröffentlichungsnummer: WO 2018/178021

(56) Entgegenhaltungen:
- WO-A2-2010/076265
- US-A1- 2002 039 552
- US-A1- 2002 140 137

## Beschreibung

### GEGENSTAND DER ERFINDUNG

Die vorliegende Erfindung betrifft ein Verfahren zur Herstellung von
- kristallwasserfreiem Eisen(II)-Orthophosphat der allgemeinen Formel Fe₃(PO₄)₂ oder
- kristallwasserfreiem Eisen(II)-Metall-Orthophosphat, Eisen(II)-Metall-Pyrophosphat oder Eisen(II)-Metall-Metaphosphat der allgemeinen Formel FeₐMet_{b}(PO_{c})_{d}, worin a eine Zahl von 1 bis 5 ist, b eine Zahl von >0 bis 5 ist, c eine Zahl von 2,5 bis 5 ist, d eine Zahl von 0,5 bis 3 ist und wobei Met ein oder mehrere Metalle repräsentiert, ausgewählt aus der Gruppe, bestehend aus K, Rb, Cs, Mg, Ca, Sr, Ba, den Übergangsmetallen (d-Block), insbesondere Sc, Y, La, Ti, Zr, Hf, Nb, Ta, Cr, Mo, W, Mn, Cu, Zn, sowie den Metallen und Halbmetallen der dritten, vierten und fünften Hauptgruppe, insbesondere B, AI, Ga, In, Si, Sn, Sb, Bi, und den Lanthanoiden, oder Kombinationen der vorgenannten Phosphate.

### HINTERGRUND DER ERFINDUNG

Aus der Literatur ist eine Vielzahl verschiedener Verfahren zur Herstellung von Metallphosphat-Verbindungen bekannt. Beispielhaft seien Hochtemperaturfestphasenreaktionen, Sol-Gel-Prozesse, Carbothermalsynthesen und Co-Präzipitationen genannt. Aufgrund des breiten Anwendungsspektrums sind Solvothermalsynthesen und Redoxausfällungsreaktionen, an die sich häufig Wärmebehandlungsschritte anschließen, um die gebildeten Vorläuferverbindungen in die gewünschten Phasen zu überführen, besonders vorteilhaft.

Bei Solvothermalsynthesen werden die Edukte in einem geeigneten Lösemittel unter erhöhtem Druck in einem Autoklaven bei Temperaturen von 100 - 400°C umgesetzt. Durch die speziellen Reaktionsbedingungen wird das Lösevermögen des Lösemittels verbessert, sodass mit diesem Verfahren selbst Reaktionen möglich sind, die unter drucklosen Bedingungen nicht durchführbar wären. Häufig verwendete Lösemittel sind Wasser (Hydrothermalsynthese), kurzkettige Alkohole, Ammoniak oder Kohlendioxid.

Bei Redoxausfällungsreaktionen werden die Edukte in Lösung, Suspension oder in Vermengung miteinander zur Umsetzung gebracht, wobei Oxidations- und Reduktionsprozesse ablaufen, bei denen ein schwerlösliches Produkt entsteht und aus dem entsprechenden Medium ausfällt.

WO 98/31630 A1 betrifft ein Verfahren zur Herstellung von synthetischen Phosphor enthaltenden Mineralien, die eine verbesserte Zusammensetzungshomogenität und modifizierte Kristallstrukturen aufweisen sollen, insbesondere Calcium enthaltende Mineralien für Zementzusammensetzungen, die zur Reparatur und zum Ersetzen von Knochen in orthopädischen Verfahren und Dentalverfahren geeignet sein sollen. In einem Beispiel wird die Herstellung eines Eisen(II)-Phosphats beschrieben, wobei wässrige Phosphinsäurelösung, H₃PO₂, mit Eisen(III)-Nitrat-Nonahydrat, Fe(NO₃)₃ 9H₂O, in einem Molverhältnis von Fe/P von 1:1 gemischt und umgesetzt werden. Dabei geht zunächst das Eisen(III)-Nitrat in Lösung, und bei der Umsetzung bildet sich neben anderen Produkten unter anderem ein gelber Feststoff sowie NOₓ-Gas. Der gelbe Feststoff wurde einer Wärmebehandlung an Luft für 1 Stunde bei 500°C unterzogen und anschließend mittels Röntgendiffraktometrie (XRD) analysiert. Die Autoren der WO 98/31630 A1 führen aus, das Produkt der Wärmebehandlung enthalte als Hauptphase Fe₃(PO₄)₂ mit Graftonit-Kristallstruktur zusammen mit weiterem amorphem Material. Das in der WO 98/31630 A1 hierzu wiedergegebene Röntgendiffraktogramm lässt jedoch Zweifel daran aufkommen, dass das Produkt tatsächlich Fe₃(PO₄)₂ mit Graftonit-Kristallstruktur als Hauptphase enthält. Nachteilig ist bei diesem Verfahren zudem die offensichtlich starke Verunreinigung des Produkts und die Bildung von NOₓ-Gas.

Swider, J. et al., Procedia Engineering, 98 (2014), 36-41, beschreibt die Synthese von hochreinem, nanokristallinem LiFePO₄ durch Co-Präzipitation in einem wasserfreiem Medium. Die Synthese des LiFePO₄ erfolgt über einen zweistufigen Prozess. Hierzu werden Eisensulfat-Heptahydrat, FeSO₄ 7H₂O, und Lithiumacetat in inerter Atmosphäre in Ethylenglykol gelöst und tropfenweise Ammoniumdihydrogenphosphat in Ethylenglykol zugegebenen. Ein bei der Umsetzung entstehendes Präzipitat wurde abgetrennt, mehrmals mit Aceton gewaschen und bei 40°C für 24 h an Luft getrocknet. Das Zwischenprodukt, bezeichnet als LiFePO₄-Precursor, wurde dann bei 550-750°C für 12h unter Inertgasatmosphäre kalziniert. Nachteilig sind bei diesem Verfahren die langen Trocknungs- und Kalzinierungsdauern und, dass sowohl die Co-Präzipitation als auch der Kalzinierungsschritt unter Inertgasatmosphäre durchgeführt werden müssen.

Die WO 2010/076265 A1 betrifft ein Verfahren zur Herstellung von Lithium-Metall-Phosphaten unter hydrothermalen Bedingungen, wobei das Metall ein Nebengruppenelement wie Eisen sein kann. Das Nebengruppenelement liegt im Ausgangsmaterial zumindest teilweise in einer Oxidationsstufe > +2 vor. Im Reduktionsschritt des Verfahrens wird dieses Nebengruppenelement reduziert, um eine Oxidationsstufe von +2 zu erhalten.

Die US 2002/039552 A1 betrifft u.a. die Herstellung eines Eisen(II)-Orthophosphats mit Graftonit-Struktur. Als Ausgangsmaterial des Herstellverfahrens dienen H₃PO₂ und Fe(NO₃)₃*9 H₂O. Bei der exothermen Reaktion wird NOₓ freigesetzt.

Die US 2002/140137 A1 offenbart ebenfalls die Herstellung eines Eisen(II)-Orthophosphats mit Graftonit-Struktur ausgehend von H₃PO₂ und Fe(NO₃)₃*9 H₂O. Bei der exothermen Reaktion wird NOₓ freigesetzt.

### AUFGABE

Die Aufgabe der vorliegenden Erfindung bestand in der Bereitstellung eines Verfahrens zur Herstellung von kristallwasserfreien Eisen(II)-Phosphat-Verbindungen der eingangs genannten Art, welches die Nachteile der Verfahren nach dem Stand der Technik überwindet, insbesondere die geringe Effizienz und unerwünschte Nebenreaktionen.

### BESCHREIBUNGS DER ERFINDUNG

Diese Aufgabe wird erfindungsgemäß gelöst durch ein Verfahren zur Herstellung von
- kristallwasserfreiem monometallischem Eisen(II)-Orthophosphat der allgemeinen Formel Fe₃(PO₄)₂ oder
- kristallwasserfreiem gemischtmetallischem Eisen(II)-Metall-Orthophosphat, Eisen(II)-Metall-Pyrophosphat oder Eisen(II)-Metall-Metaphosphat der allgemeinen Formel FeₐMet_{b}(PO_{c})_{d}, worin a eine Zahl von 1 bis 5 ist, b eine Zahl von >0 bis 5 ist, c eine Zahl von 2,5 bis 5 ist, d eine Zahl von 0,5 bis 3 ist und wobei Met ein oder mehrere Metalle repräsentiert, ausgewählt aus der Gruppe, bestehend aus K, Rb, Cs, Mg, Ca, Sr, Ba, den Übergangsmetallen (d-Block), insbesondere Sc, Y, La, Ti, Zr, Hf, Nb, Ta, Cr, Mo, W, Mn, Cu, Zn, sowie den Metallen und Halbmetallen der dritten, vierten und fünften Hauptgruppe, insbesondere B, AI, Ga, In, Si, Sn, Sb, Bi, und den Lanthanoiden,
   oder Kombinationen der vorgenannten Phosphate
mit den Stufen:
a) Herstellen eines Gemisches, enthaltend:
   i) Eisenverbindung (A), ausgewählt unter Fe(III)-Verbindungen, Fe(III)/Fe(II)-Verbindungen und Gemischen davon, in einem Anteil von 20 bis 90 Gew.-% des Gemisches, ausgewählt aus der Gruppe bestehend aus Oxiden, Hydroxiden, Oxidhydroxiden, Carbonaten, Carboxylaten wie Oxalaten, Formiaten, Acetaten, Citraten, Lactaten, Orthophosphaten, Phosphonaten, Metaphosphaten, Pyrophosphaten, Sulfaten und Gemischen der vorgenannten,
   ii) Reduktionsmittel (B) in einem Anteil von 5 bis 50 Gew.-% des Gemisches, ausgewählt aus der Gruppe, bestehend aus Phosphonsäure [H₃PO₃], Phosphortrioxid [P₂O₃], Phosphinsäure [H₃PO₂], Phosphortetraoxid [P₂O₄], Hypodiphosphorsäure [H₄P₂O₆], Diphosphonsäure [H₄P₂O₅], Hypodiphosphonsäure [H₄P₂O₄], Fe-Salzen und Met-Salzen der vorgenannten Säuren und Gemischen der vorgenannten, als Feststoffe oder wässrige Lösung oder Suspension,
   iii) optional Phosphatdonor (C) in einem Anteil von 0 bis 50 Gew.-% des Gemisches, ausgewählt unter Phosphorsäure [H₃PO₄] als wässrige Lösung, Metallphosphat [Metₓ(PO₄)_{z}] oder saures Metallphosphat [MetₓH_{Y}(PO₄)_{z}] mit 1≥x≥4, 1≥y≥5 und 1≥z≥4 als Feststoff oder wässrige Lösung oder Suspension, Diphosphorsäure [H₄P₂O₇], Metaphosphorsäure [(HPO₃)ₙ] mit n≥3 oder deren Salze, Phosphorpentoxid [P₂O₅] oder Gemische der vorgenannten, wobei Met wie oben definiert ist,
   iv) optional Metal (Met)-Donor (D) in einem Anteil von 0 bis 50 Gew.-% des Gemisches, ausgewählt unter Metallverbindungen von einem oder mehreren Metallen aus der Gruppe, bestehend aus K, Rb, Cs, Mg, Ca, Sr, Ba, den Übergangsmetallen (d-Block), insbesondere Sc, Y, La, Ti, Zr, Hf, Nb, Ta, Cr, Mo, W, Mn, Cu, Zn, sowie den Metallen und Halbmetallen der dritten, vierten und fünften Hauptgruppe, insbesondere B, Al, Ga, In, Si, Sn, Sb, Bi, und den Lanthanoiden, und ausgewählt unter Oxiden, Hydroxiden, Oxidhydroxiden, Carbonaten, Oxalaten, Formiaten, Acetaten, Citraten, Lactaten, Orthophosphaten, Pyrophosphaten und Sulfaten der vorgenannten Metalle und Gemischen davon,
   wobei sich die Gewichtsanteile der Bestandteile (A) bis (D) des Gemisches auf die Anteile der Stoffe ohne Lösungsmittel und/oder Suspendiermittel beziehen,
b) das erhaltene Gemisch, sofern wässriges und/oder organisches Lösungsmittel enthalten ist, bei einer Temperatur von weniger als 400°C trocknet,
c) das trockene oder getrocknete Gemisch bei einer Temperatur im Bereich von 400 bis 1200°C behandelt.

In einer Ausführungsform der Erfindung ist oder umfasst das erfindungsgemäß hergestellte Produkt kristallwasserfreies monometallisches Eisen(II)-Orthophosphat der allgemeinen Formel Fe₃(PO₄)₂. Der Begriff "monometallisch" bedeutet hierin, dass das Produkt als metallische (kationische) Komponente nur Eisen(II) enthält.

In weiteren Ausführungsformen der Erfindung ist oder umfasst das erfindungsgemäß hergestellte Produkt kristallwasserfreies gemischtmetallisches Eisen(II)-Metall-Orthophosphat, Eisen(II)-Metall-Pyrophosphat oder Eisen(II)-Metall-Metaphosphat der allgemeinen Summenformel FeₐMet_{b}(PO_{c})_{d}, worin a eine Zahl von 1 bis 5 ist, b eine Zahl von >0 bis 5 ist, c eine Zahl von 2,5 bis 5 ist, d eine Zahl von 0,5 bis 3 ist. Der Begriff" gemischtmetallisch" bedeutet hierin, dass das Produkt als metallische (kationische) Komponenten neben Eisen(II) wenigstens ein weiteres Metall enthält, welches hierin mit "Met" abgekürzt ist.

Bei den erfindungsgemäßen Produkten liegt der Phosphor in der Oxidationsstufe (V) vor. Geringe Anteile von Phosphor in anderen Oxidationsstufen sind herstellungsbedingt nicht auszuschließen und sollen vom Schutz im Umfang unvermeidbarer Verunreinigungen umfasst sein. Die erfindungsgemäßen Produkte leiten sich von der Orthophosphorsäure (H₃PO₄) und ihren Kondensaten (Polymeren) ab. Orthophosphate besitzen die anionische Struktureinheit [PO₄³⁻], Pyrophosphate, auch Diphosphate, besitzen die Struktureinheit [P₂O₇⁴⁻] und die zyklischen Metaphosphate besitzen die Struktureinheit = [(PO₃⁻)ₙ].

Nachfolgend werden die Stufen a), b) und c) des erfindungsgemäßen Verfahrens einschließlich besonderer Ausführungsformen davon näher beschrieben.

### Stufe a)

Das Herstellen des Gemisches der erfindungsgemäßen Edukte Eisenverbindung (A) und Reduktionsmittel (B) sowie optional Phosphatdonor (C) und Metal (Met)-Donor (D) in Stufe a) des erfindungsgemäßen Verfahrens kann durch Lösen, Suspendieren und/oder Vermengen der Bestandteile in einem wässrigen oder organischen Lösungsmittel oder ohne zusätzliches Lösungsmittel erfolgen.

Die hierin angegebenen Gewichtsanteile der Bestandteile (A) bis (D) des Gemisches beziehen sich auf die Anteile der Stoffe ohne Lösungsmittel und/oder Suspendiermittel. So wird beispielsweise bei einer als Phosphatdonor (C) eingebrachten Phosphorsäure [H₃PO₄], die als wässrige Lösung eingesetzt wird, der Gewichtsanteil H₃PO₄ ohne den als Lösungsmittel eingebrachten Wasseranteil angegeben.

Das Herstellen einer Suspension in einem polaren Lösungsmittel, welches wenigstens eines der Edukte suspendiert enthält, kann vorteilhaft sein, da die Produkte in gängigen polaren Lösemitteln üblicherweise gut löslich sind und dies den Reaktionsfortschritt begünstigen kann.

Bevorzugt wird zur Herstellung des erfindungsgemäßen Gemisches in Stufe a) ein polares Lösungsmittel eingesetzt, zweckmäßigerweise ein Lösungsmittel mit niedriger Viskosität und/oder mit niedrigem Siedepunkt, da hierdurch der anschließende Trocknungsschritt insbesondere bei Anwendung des Sprühtrocknungsverfahrens erheblich vereinfacht und beschleunigt wird. Geeignet sind Wasser, Alkohole und Polyole niedriger Kettenlänge und Ammoniak sowie Gemische der vorgenannten. Besonders bevorzugt ist Wasser, da es eine niedrige Viskosität und sehr gute Löseeigenschaften aufweist.

Das Lösungs- und/oder Suspendiermittel kann in einem Verhältnis zur Gesamtmasse des Gemisches ohne Lösungs- und/oder Suspendiermittel von 10 bis 0,1 vorliegen. Bevorzugt ist ein Gewichtsverhältnis von 8 bis 1, besonders bevorzugt 4 bis 1. Ein hoher Anteil an Lösungs- und/oder Suspendiermittel kann das Prozessieren des Gemisches vereinfachen, wohingegen ein geringerer Anteil an Lösungs- und/oder Suspendiermittel den anschließenden Trocknungsschritt entsprechend verkürzt.

In einer bevorzugten Ausführungsform der Erfindung sind die als Eisenverbindung (A) eingesetzten Fe(III)- und/oder Fe(III)/Fe(II)-Verbindungen unter Oxiden, Hydroxiden, Oxidhydroxiden, Orthophosphaten, Pyrophosphaten, Metaphosphaten und Sulfaten ausgewählt. Diese haben den Vorteil, dass das Anion während des Mischungs- und Trocknungsvorgangs stabil ist. Stabil heißt in diesem Zusammenhang, dass keine unerwünschten Zersetzungs- und/oder Redoxreaktionen auftreten. Weiterhin bieten diese Anionen den Vorteil, dass sie während der in der Temperaturbehandlungsstufe c) stattfindenden Redoxprozesse keine unerwünschten Nebenprodukte freisetzen. Dadurch kann ein Produkt mit gleichförmigerer Korngrößenverteilung und Porosität erhalten werden. Zudem ist keine aufwendige Aufreinigung der Reaktionsatmosphäre erforderlich, wie teilweise in den literaturbekannten Verfahren. Die Verwendung von Fe(III)- und/oder Fe(III)/Fe(II)-Orthophosphaten, -Pyrophosphaten und -Metaphosphaten hat den weiteren Vorteil, dass sie gleichzeitig Phosphationen mit Phosphor in der Oxidationsstufe (V) für die Produktbildung bereitstellen.

Der Anteil der Eisenverbindung (A) an dem in Stufe a) hergestellten Gemisch beträgt 20 bis 90 Gew.-%, vorzugsweise 25 bis 85 Gew.-%, besonders bevorzugt 30 bis 75 Gew.-%, bezogen auf das Gesamtgewicht aller Bestandteile i) bis iv) ohne Lösungs- bzw. Suspendiermittel.

In einer bevorzugten Ausführungsform der Erfindung ist das Reduktionsmittel (B) unter Phosphonsäure, Phosphinsäure, Hypodisphosphorsäure, Diphosphonsäure und Hypodiphosphonsäure oder Gemischen davon ausgewählt. Diese sind als Lösung einfach zu handhaben und ermöglichen damit eine sehr einfache Prozessführung und Zudosierung der Substanzen.

Alternativ oder ergänzend können als erfindungsgemäßes Reduktionsmittel (B) die Säureanhydride Phosphortrioxid, Phosphortetraoxid oder ein Gemisch davon eingesetzt werden. Die Verwendung eines Anhydrids hat den Vorteil, dass der sich an die Stufe a) anschließende Trocknungsschritt b) aufgrund des geringeren Wassergehaltes des Anhydride verhältnismäßig schnell durchgeführt werden kann.

Der Anteil des Reduktionsmittels (B) an dem in Stufe a) hergestellten Gemisch beträgt 5 bis 50 Gew.-%, vorzugsweise 7,5 bis 40 Gew.-%, besonders bevorzugt 10 bis 30 Gew.-%, bezogen auf das Gesamtgewicht aller Bestandteile i) bis iv) ohne Lösungs- bzw. Suspendiermittel.

Das in Stufe a) hergestellte Gemisch kann weiterhin zusätzlich einen Phosphatdonor (C) enthalten, der Phosphatanionen mit Phosphor in der Oxidationsstufe (V) in das Gemisch einbringt. Vorteilhaft ist es, den zusätzlichen Phosphatdonor (C) in einer Menge zuzusetzen, sodass die aus dem Reduktionsmittel (B) in der Temperaturbehandlungsstufe c) erzeugten Phosphationen und die durch den Phosphatdonor (C) eingebrachten Phosphationen in einer solchen molaren Menge im Verhältnis zu den Fe-lonen und ggf. Met-lonen vorliegen, dass ausreichend Phosphationen für die Produktbildung bereitstehen. Aufgrund der guten Verfügbarkeit, der einfachen Dosierbarkeit und des sehr geringen Preises ist der Einsatz von wässrigen, stark sauren Lösungen von Phosphorsäure als Phosphatdonor (C) vorteilhaft. Die Verwendung des korrespondieren Säureanhydrids P₂O₅ ist mit dem Vorteil verbunden, dass der sich an die Vermischung anschließende Trocknungsschritt aufgrund des geringeren Wassergehaltes erheblich schneller durchgeführt werden kann.

Durch die Auswahl der Anteile an Phosphatdonor (C) und Reduktionsmittel (B), welche beide zum Phosphatanteil im Endprodukt beitragen, lässt sich zudem mit Vorteil die reduzierende Wirkung des Reduktionsmittels (B) in dem Gemisch kontrollieren bzw. einstellen, um beispielsweise eine Überreduzierung, z. B. zum Phosphid, zu verhindern und gleichzeitig ausreichend Phosphorverbindung für den Erhalt des gewünschten Produkts bereitzustellen.

Der Anteil des zusätzlichen Phosphatdonors (C) an dem in Stufe a) hergestellten Gemisch beträgt 0 bis 50 Gew.-%, vorzugsweise 0 bis 40 Gew.-%, besonders bevorzugt 0 bis 30 Gew.-%, bezogen auf das Gesamtgewicht aller Bestandteile i) bis iv) ohne Lösungs- bzw. Suspendiermittel.

Das in Stufe a) hergestellte Gemisch kann weiterhin zusätzlich einen Metalldonor (D) enthalten. Dieser Metalldonor (D) liefert bei der erfindungsgemäßen Herstellung von kristallwasserfreiem gemischtmetallischem Eisen(II)-Metall-Orthophosphat, Eisen(II)-Metall-Pyrophosphat oder Eisen(II)-Metall-Metaphosphat der allgemeinen Formel FeₐMet_{b}(PO_{c})_{d} zusätzlich zu Eisen enthaltende Metall-Komponente "Met", sofern diese nicht bereits in ausreichendem Anteil über den Phosphatdonor (C) eingebracht wird. Es versteht sich, dass Metalldonor (D) und "Met" enthaltender Phosphatdonor (C) nicht bei der erfindungsgemäßen Herstellung von kristallwasserfreiem monometallischem Eisen(II)-Orthophosphat eingesetzt werden.

Erfindungsgemäß ist der Metall (Met)-Donor (D) aus der Gruppe ausgewählt, bestehend aus Oxiden, Hydroxiden, Oxidhydroxiden, Carbonaten, Oxalaten, Formiaten, Acetaten, Citraten, Lactaten, Orthophosphaten, Pyrophosphaten, Sulfaten und Gemischen davon. Die Verwendung von Hydroxiden, Oxidhydroxiden, Carbonaten, Oxalaten, Formiaten, Acetaten, Citraten und/oder Lactaten hat den Vorteil, dass aus diesen Verbindungen nach der Temperaturbehandlung in Stufe c) keine Rückstände des Anions als Verunreinigungen im Produkt zurückbleiben. Die Verwendung von Orthophosphaten und Pyrophosphaten hat den Vorteil, dass damit gleichzeitig Phosphatanionen für die Bildung des Endprodukts bereitgestellt werden.

Der Anteil des zusätzlichen Metalldonors (D) an dem in Stufe a) hergestellten Gemisch beträgt 0 bis 50 Gew.-%, vorzugsweise 0 bis 40 Gew.-%, besonders bevorzugt 0 bis 30 Gew.-%, bezogen auf das Gesamtgewicht aller Bestandteile i) bis iv) ohne Lösungs- bzw. Suspendiermittel.

Die Herstellung des Gemisches erfolgt zweckmäßigerweise in einem gerührten Ansatzbehälter (Kessel) mit oder ohne Lösungs- bzw. Suspendiermittel. Vorteilhaft ist auch die Verwendung wenigstens eines Rühraggregats, wie beispielsweise Propellerrührer, Schrägblattrührer, Scheibenrührer, Taumelscheibenrührer, Hollowbladerührer, Impellerrührer, Kreuzbalkenrührer, Ankerrührer, Blattrührer, Gitterrührer, Gaseinleitungsrührer, Wendelrührer, Zahnscheibenrührer, Restmengenrührer, Leitstrahlmischer, Dispergierer sowie Kombinationen dieser Aggregate. In einer besonders bevorzugten Variante erfolgt die Herstellung des Gemisches unter gleichzeitiger Verwendung von mindestens einem einachsigen Rührer (Blattrührer, Balkenrührer, Lochbalkenrührer, Kreuzbalkenrührer, Propellerrührer, Turbinenrührer, Scheibenrührer, Impellerrührer) mit 1 bis 3 Rührerebenen und mindestens einem Dispersionsaggregat in Form schelllaufender Rührer bzw. Dispergierer, wie etwa Zahnscheibe oder Disperser. In einer weiteren bevorzugten Variante ist wenigstens ein Dispergieraggregat ausserhalb des Kessels in einem Umpumpkreislauf angeordnet, durch das die Lösung bzw. Suspension kontinuierlich im Kreislauf gefördert wird. In einer weiteren bevorzugten Variante erfolgt die Herstellung des Gemisches in einem Ansatzbehälter, der über Heiz- und/oder Kühlelemente in Form von eigebauten Wendeln oder eines Doppelmantels vefügt, um die Temperatur des Gemisches einzustellen. Darüber hinaus kann das Aufheizen des erfindungsgemäßen Gemisches mit Hilfe einer Dampflanze erfolgen. In einer weiteren bevorzugten Variante erfolgt die Temperaturkontrolle des erfindungsgemäßen Gemisches über einen Umpumpkreislauf am Reaktor, der mit einem Wärmetauscher ausgestattet ist.

Für das erfindungsmäße Verfahren, bei dem das Gemisch eine Lösung oder Suspension ist, ist der Ansatzbehälter in einer bevorzugten Ausführungsform mit mindestens einem Rückflusskühler ausgestattet, um eine Veränderung des Feststoffgehaltes durch verdampfendes Lösungsmittel im Wesentlichen zu unterbinden.

In einer weiteren Variante, bei der das Gemisch eine Lösung oder Suspension ist, erfolgt die Herstellung des erfindungsgemäßen Gemisches im Temperaturbereich zwischen 10°C oder Raumtemperatur und dem Siedepunkt der Lösung bzw. Suspension, vorzugsweise bei einer Temperatur < 150°C. Bevorzugt ist ein Temperaturbereich von 20°C bis 100°C, besonders bevorzugt von 40°C bis 90°C. Des Weiteren kann die Herstellung der erfindungsgemäßen Lösung bzw. Suspension unter Verwendung eines geschlossenen Behälters bei Temperaturen oberhalb des Siedepunktes der Flüssigkeit unter autogenem Druck des Lösungsmittels bei der entsprechenden Temperatur durchgeführt werden.

### Stufe b)

Das in Stufe a) des erfindungsgemäßen Verfahrens hergestellte Gemisch wird, sofern wässriges und/oder organisches Lösungsmittel enthalten ist, in der sich anschließenden Stufe b) bei einer Temperatur von weniger als 400°C getrocknet. Dabei bezeichnet die Temperatur von weniger als 400°C die Temperatur des zu trocknenden Gemisches im Trocknungsvorgang. Je nach Trocknungsvefahren kann die Temperatur der umgebenden Atmosphäre darüber liegen.

Trocknen bedeutet in diesem Zusammenhang, dass Wasser und/oder andere Lösemittel soweit aus dem Gemisch entfernt werden, dass der Gehalt an Wasser und/oder anderem Lösemittel nach dem Trocknungsvorgang höchstens noch 5 Gew.-% der Gesamtmasse des Gemisches, bevorzugt nicht mehr als 3 Gew.-%, besonders bevorzugt nicht mehr als 0,8 Gew.-% ausmachen. Der Trocknungsgrad lässt sich beispielsweise mittels Thermogravimetrie (TGA) ermitteln.

Das Trocknen des Gemisches in Stufe b) kann mit jedem geeigneten Trocknungsverfahren durchgeführt werden, beispielsweise Gefriertrocknung, überkritische Trocknung, Mikrowellentrocknung, Vakuumtrocknung, konvektive Trocknung, wie konvektive Lufttrocknung oder konvektive Trocknung unter Inertgasatmosphäre, Sprühtrocknung, Sprühgranulation oder Trocknung im Drehrohrofen.

Besonders bevorzugte Trocknungsverfahren sind konvektive Trocknung unter Inertgasatmosphäre und Sprühtrocknung oder Sprühgranulation, da diese die Oxidationsneigung des Produktes gering halten. Ganz besonders bevorzugt ist die Sprühtrocknung, da diese sehr energieeffizient ist und ein Produkt mit gleichförmiger Partikelgrößenverteilung liefert. Bei der Trocknung durch konvektive Verfahren, beispielsweise im Drehrohrofen, kann die Temperatur des Trocknungsgases bis zu 600°C betragen, wenn die Trocknung unter Inertgasatmosphäre durchgeführt wird, wobei die Temperatur des zu trocknenden Gemisches 400°C nicht übersteigen darf. Wenn die konvektive Trocknung nicht unter Inertgasatmosphäre durchgeführt wird, sollte die Temperatur des Trocknungsgases 400°C, vorzugsweise 300°C, besonders bevorzugt 250°C nicht übersteigen, um eine Oxidation des Reduktionsmittels in dem Gemisch durch Sauerstoff zu vermindern.

### Sprühtrocknung:

In einer bevorzugten Herstellvariante erfolgt die Trocknung der erfindungsgemäßen Produkte in Stufe (b) durch Zerstäuben der erfindungsgemäß hergestellten Lösung bzw. Suspension in einen Heißgasstrom in einem Sprühtrockner. Dabei werden Heißgas und Produktstrom im Gleich- oder Gegenstrom geführt, und die Zerstäubung erfolgt unter Verwendung von mindestens einer Druckdüse, einer Einstoffdüse oder einer Zweistoffdüse oder mindestens eines Rotationszerstäubers oder Kombinationen davon. Besonders bevorzugt ist die Trocknung im Gleichstromverfahren. Als Heißgasstrom dienen vorzugsweise erhitze Luft, Brennerabgase enthaltende Luft, sauerstoffreduzierte Luft, die mit Stickstoff oder Inertgasen angereichert sind, sowie Stickstoff. Besonders bevorzugt ist die Verwendung erhitzter Luft sowie Brennerabgase enthaltende Luft. Dier Erhitzung des Heißgasstroms erfolgt dabei vorzugsweise mittels mindestens einem Brenner, Heißgaserzeuger, elektrischem Gaserhitzer oder Dampfwärmetauscher sowie Kombinationen davon. Bevorzugt bei der Zerstäubung ist die Verwendung mindestens einer Zweistoffdüse oder eines Rotationszerstäubers. Besonders bevorzugt erfolgt die Zerstäubung in einer Zweistoffdüse unter Verwendung von Pressluft, Stickstoff oder Heißdampf mit einem Druck von 1,0 bis 6,0 bar (= 100.000 bis 600.000 m⁻¹·kg·s⁻²). Insbesondere bevorzugt ist die Verwendung von Pressluft im Druckbereich von 1,5 -3,0 bar (= 150.000 bis 300.000 m⁻¹·kg·s⁻²).

Die Abscheidung des getrockneten Produktstroms aus dem Prozessgasstrom wird vorzugsweise mit mindestens einem Zyklon oder mindestens einem Filter oder Kombinationen daraus durchgeführt. Besonders bevorzugt ist die Verwendung eines Filters.

Die mittlere Partikelgröße des erhaltenen Produkts liegt bevorzugt im Bereich von 1 bis 150µm (d50).

### Sprühgranulation:

In einer weiteren bevorzugten Herstellvariante erfolgt die Trocknung der erfindungsgemäßen Produkte durch Zerstäuben der erfindungsgemäß hergestellten Lösung bzw. Suspension auf ein in einem Heißgasstrom gewirbeltes Bett aus bereits getrocknetem Gut in einem Sprühgranulator mit mindestens einer Granulationszone. Dabei erfolgt die Zerstäubung der erfindungsgemäßen Lösung bzw. Suspension mit mindestens einer Druckdüse, einer Einstoffdüse, einer Zweistoffdüse, einer Mehrstoffdüse oder einer Kombination daraus. Die Herstellung kann dabei sowohl ansatzweise (Batch-Verfahren) oder kontinuierlich erfolgen. Bevorzugt erfolgt die Zerstäubung mit Zweistoffdüsen unter Verwendung von Pressluft, Stickstoff oder Heißdampf mit einem Druck von 1,0 bis 6,0 bar (= 100.000 bis 600.000 m-¹·kg·s⁻²).. Besonders bevorzugt ist die Verwendung von Pressluft im Druckbereich von 1,5 -3,0 bar (= 150.000 bis 300.000 m⁻¹·kg·s⁻²).

In einer besonders bevorzugten Variante erfolgt die Sprühgranulation mit einer Granulationszone in kontinuierlicher Fahrweise durch kontinuierliches Aufsprühen der Lösung bzw. Suspension und kontinuierliche Entnahme von getrocknetem Granulat aus der Wirbelschicht. Als Heißgasstrom eignen sich erhitze Luft, erhitzte Brennerabgase enthaltende Luft, erhitzte sauerstoffreduzierte Luft die mit Stickstoff oder Inertgasen angereichert ist, sowie erhitzter Stickstoff. Besonders bevorzugt ist die Verwendung erhitzter Luft sowie erhitzter Brennerabgase enthaltender Luft. besonders bevorzugten Variante wird die letzte Wirbelzone zum Kühlen des Gutes genutzt und ohne Aufsprühen der erfindungsgemäßen Lösung bzw. Suspension mit kühlerem Gas gewirbelt und ausgetragen.

Bei dem Verfahren der Sprühgranulation wird zweckmäßigerweise die erforderliche Wirbelschicht im Sprühgranulator kontinuierlich durch Abrieb und Sprühtrocknung erzeugt und mittels Filtern bzw. Filterrückführung im Gerät bereitgestellt. In einer besonders bevorzugten Ausführungsform verfügt die Granulationsanlage zusätzlich über einen Sieb-Mahl-Kreislauf, aus dem zum Einen das erfindungsgemäße Trockenprodukt von zu groben und zu feinen Partikeln durch Siebung getrennt und die Grob- und Feinfraktionen über eine Mahlung dem Sprühgranulator wieder als Wirbelschicht zugeführt werden. Die Heißgaserzeugung für die Sprühgranulation erfolgt analog zur Heißgaserzeugung bei der Sprühtrocknung.

Die mittlere Partikelgröße (d50) der so erzeugten Granulate liegen geeigneterweise im Bereich von 150 bis 2000 µm, bevorzugt 150 bis 1000 µm, besonders bevorzugt 300 bis 800 µm.

### Stufe c)

Das getrocknete Gemisch wird anschließend einer Temperaturbehandlung (Kalzinierung) im Bereich von 400 bis 1200°C, vorzugsweise 500 bis 1100°C, besonders bevorzugt 600 bis 1000°C unterzogen. Die Temperatur ist so hoch zu wählen, dass ein Schmelzen aller reaktionsbeteiligten Stoffe gewährleistet ist. Zudem führt eine hohe Temperatur zu einer hohen lonenbeweglichkeit und damit einer schnellen Reaktionskinetik mit entsprechendem Einfluss auf die erforderliche Reaktionsdauer.

Die Temperaturbehandlung der erfindungsmäßen Produkte erfolgt ansatzweise oder kontinuierlich unter inerter oder reduzierender Atmosphäre, vorzugsweise Stickstoff, Edelgas, Formiergas mit höchstens 5 Vol.-% H₂ oder Kombinationen daraus. Der volumetrische Sauerstoffanteil des Prozessgases beträgt zweckmäßigerweise 0,0 - 1,0 Vol.-%, bevorzugt weniger als 0,3 Vol.-%, besonders bevorzugt weniger als 0,03 Vol.-%. Ganz besonders bevorzugt ist die Verwendung von Formiergas "95/5", d. h. 95 Vol.-% Stickstoff (N₂) und 5 Vol.-% Wasserstoff (H₂).

In einer bevorzugten Ausführungsform erfolgt die Temperaturbehandlung in Stufe (c) in kontinuierlicher Fahrweise unter kontrollierten Atmosphären, wobei die Prozessgasatmosphäre im Gleichstrom mit dem Produkt oder im Gegenstrom geführt wird.

In einer weiteren bevorzugten Variante werden die erfindungsgemäßen Verbindungen durch thermische Behandlung mit gegenläufigem Prozessgas in einem Drehrohr mit angeschlossener Kühlzone thermisch behandelt. Dabei wird das Prozessgas kühlzonenseitig eingeleitet und überströmt das abkühlende Gut, um eine Oxidation zu verhindern. Besonders vorteilhaft ist dabei die Verwendung indirekt beheizter Drehrohre mit mindestens einer beheizten Zone, bevorzugt aber 2 bis 8 unabhängig regelbaren Heizzonen. Die indirekte Beheizung kann dabei auf verschiedenste Weisen erfolgen, typischerweise mit elektrischen Widerstandsheizungen (Heizstäbe, Heizwendel), mit Gasbrennern, Ölbrennern, durch Induktion etc. Bevorzugt sind elektrische Widerstandsheizungen und Gasbrenner.

In einer weiteren bevorzugten Ausführungsform verfügt das Drehrohr innenseitig über Einbauten in Form von Hubschaufeln, vorzugsweise zwei bis sechs radial fördernden Hubschaufeln, welche die Durchmischung der Feststoffe mit der Gasphase verbessern und den Wärmeübergang wandseitig begünstigen. Darüber hinaus sind auch Hubschaufeln oder Einbauten mit axialer Förderkomponente zweckmäßig, welche geeignet sind, die Verweilzeiten im Drehrohr zu verkürzen. Geeignete Drherohre verfügen über gasgespülte Dichtungen, die mit Inertgas bzw. reduzierender Atmosphäre beaufschlagt werden, um das Eindringen von Sauerstoff zu unterbinden. Eine atmosphärische Entkopplung erfolgt zweckmäßigerweise über Doppelpendelklappen, Zellradschleusen und/oder gespülte Schnecken. Eine Überschichtung des Aufgabegutes mit inerter bzw. reduzierender Atmosphäre minimiert den Eintrag von Sauerstoff in den Ofen.

Bei der Temperaturbehandlung in Stufe c) sollen unter anderem die durch die Eisenverbindung (A) in das Gemisch eingebrachten Fe(III)-lonen zu Fe(II) reduziert werden.

In einer bevorzugten Ausführungsform wird die Temperaturbehandlung in Stufe c) in einem Drehrohrofen durchgeführt. Dies ermöglicht ein kontinuierliches und damit gegenüber einem Batch-Verfahren in der Regel kostengünstigeres Temperaturbehandlungsverfahren. Besonders bevorzugt ist die Nutzung eines indirekt beheizten Drehrohrofens, da dies eine genaue Steuerung der Produktraumatmosphäre ermöglicht.

Die Temperaturbehandlung in Stufe c) des erfindungsgemäßen Verfahrens kann mit Vorteil unter Inertgasatmosphäre erfolgen, d. h. dass die Atmosphäre aus einem Gas oder Gasgemisch besteht, das im entsprechenden Temperaturbereich nicht mit den Bestandteilen des Gemisches reagiert. Als Inertgase eignen sich bevorzugt N₂ oder Edelgase, insbesondere Argon.

In einer bevorzugten Ausführungsform des erfindungsgemäßen Verfahrens erfolgt die Temperaturbehandlung in Stufe c) unter einer reduzierenden Gasatmosphäre. Eine reduzierende Gasatmosphäre bedeutet in diesem Zusammenhang, dass diese wenigstens einen reduzierenden Gasbestandteil enthält, der geeignet ist, Bestandteile des behandelten Gemisches zu reduzieren, insbesondere durch die Eisenverbindung (A) in das Gemisch eingebrachte Fe(III)-lonen zu Fe(II)-lonen zu reduzieren. Geeignete reduzierende Gasbestandteile sind CO und H₂. Besonders bevorzugt ist der Einsatz von Formiergas, welches 5 Vol-% H₂ in N₂ enthält, da dieses weder entzündbar noch giftig ist.

Erfindungsgemäß besonders bevorzugt ist es, den Großteil der Reduktion der Fe(III)-lonen zu Fe(II)-lonen mit Hilfe des Reduktionsmittels (B) und die restliche Reduktion mit Hilfe einer reduzierenden Gasatmosphäre durchzuführen. Dadurch kann sowohl die Bildung von freiem Kohlenstoff als auch die Bildung von Metallphosphiden unterdrückt werden.

In einer bevorzugten Ausführungsform des erfindungsgemäßen Verfahrens enthält das in Stufe a) hergestellte Gemisch Fe(III)-lonen in einem molaren Verhältnis zum Reduktionsmittel (B), welches basierend auf der Stöchiometrie und unter der Annahme einer 100%-igen Umsetzung eine Reduktion von 70 bis 99%, vorzugsweise 80 bis 98%, besonders bevorzugt 90 bis 95% der Fe(III)-lonen durch das Reduktionsmittel (B) zu Fe(II)-lonen liefern würde. Bei Verwendung von höheren Anteilen an Reduktionsmitteln als stöchiometrisch benötigt, besteht die Gefahr der Bildung von Metallphosphiden und/oder elementaren Metallen, die das Produkt verunreinigen und dunkel färben können. Hierbei ist erfahrungsgemäß davon auszugehen, dass 100%-ige stöchiometrische Umsetzung bzw. Reduktion von Fe(III)-lonen durch das eingesetzte Reduktionsmittel (B) nicht stattfindet. Die restliche Reduktion kann dann durch die reduzierende Gasatmosphäre erzielt werden.

Am Beispiel von Phosphonsäure [H₃PO₃] als Reduktionsmittel mit Phosphor in der Oxidationsstufe (III) entspräche dies einem stöchiometrischen Verhältnis von P(III)-Atomen des Reduktionsmittels zu Fe(III)-lonen von 0,35:1 bis 0,495:1 bei einer angenommenen Reduktion von 70 bis 99%.

Ein besonderer Vorteil des erfindungsgemäßen Verfahrens besteht in der hohen Effizienz und der Vermeidung unerwünschter Nebenreaktionen, die zur Bildung von Verunreinigungen führen. Ein weiterer Vorteil ist, dass keine zusätzlichen Reduktionsmittel, wie beispielsweise elementare Metalle, benötigt werden, um Fe(III) zu Fe(II) zu reduzieren. Die Reduktion kann alleine durch die Oxidation von Phosphor-Sauerstoffverbindungen mit einer Oxidationsstufe des Phosphors <5 erfolgen, wobei eine reduzierende Atmosphäre in der Stufe c) der Temperaturbehandlung die Reduktion ergänzen kann, um die Gefahr der Bildung von Metallphosphiden und/oder elementaren Metallen zu vermeiden.

Ein weiterer Vorteil des erfindungsgemäßen Verfahrens sind die gegenüber bekannten Verfahren für die Synthese von Eisen(II)-Phosphat-, -Pyrophosphat- und -Metaphosphatverbindungen kurzen Verweil- bzw. Reaktionszeiten. Die Temperaturbehandlung in Stufe c) nach dem erfindungsgemäßen Verfahren kann mit Verweil- bzw. Reaktionszeiten von weniger als 4 Stunden, in vielen Fällen sogar weniger als 1 bis 2 Stunden sehr effizient durchgeführt werden. Im Gegensatz dazu erfordern gängige Synthesen nach dem Stand der Technik teilweise Verweil-bzw. Reaktionszeiten über 24 Stunden.

In einer Ausführungsform der Erfindung ist das hergestellte Produkt kristallwasserfreies Eisen(II)-Orthophosphat der allgemeinen Formel Fe₃(PO₄)₂, welches die Graftonit-Kristallstruktur aufweist. Dieses Produkt eignet sich unter anderem besonders als Absorber für elektromagnetische Strahlung, insbesondere IR-Strahlung, und lässt sich zu diesem Zweck mit Vorteil in ein Trägermaterial, vorzugsweise in thermoplastische Polymere, einarbeiten.

Besonders vorteilhafte Eisen(II)-Metall-Metaphosphate der allgemeinen Formel FeₐMet_{b}(PO_{c})_{d} sind solche, in denen "Met" unter Kalium, Magnesium, Mangan und Zink ausgewählt sind. Die erfindungsgemäßen Produkte dieser Zusammensetzungen sind unter anderem für den Einsatz in Produkten geeignet, die mit Lebensmitteln in Kontakt kommen, wie beispielsweise Verpackungsmaterialien für Lebensmittel, da solche Zusammensetzungen zumindest in vielen Ländern nach derzeitigem Stand keine gesonderte lebensmittelrechtliche Zulassung erfordern.

In einer weiteren Ausführungsform der Erfindung ist das hergestellte Eisen(II)-Phosphat gemischtmetallisches kristallwasserfreies Eisen(II)-Metall-Orthophosphat der allgemeinen Formel FeₐMet_{b}(PO_{c})_{d}, wobei Met eines oder eine Kombination der Metalle Kalium (K), Magnesium (Mg) und Zink (Zn) repräsentiert, vorzugsweise Kalium (K) alleine oder in Kombination mit entweder Magnesium (Mg) oder Zink (Zn), wobei das Eisen(II)-Metall-Orthophosphat besonders bevorzugt KFePO₄, K(Fe_{0,75}Zn_{0,25})PO₄ oder K(Fe_{0,75}Mg_{0,25})PO₄ ist.

In einer weiteren Ausführungsform der Erfindung ist das hergestellte Eisen(II)-Phosphat gemischtmetallisches kristallwasserfreies Eisen(II)-Metall-Pyrophosphat der allgemeinen Formel FeₐMet_{b}(P₂O₇)_{d}, wobei Met eines oder eine Kombination der Metalle Magnesium(Mg), Calcium (Ca), Strontium (Sr) und Barium (Ba) repräsentiert, wobei das Eisen(II)-Metall- Pyrophosphat besonders bevorzugt MgFeP₂O₇, CaFeP₂O₇, SrFeP₂O₇ oder BaFeP₂O₇ ist.

Die vorgenannten gemischtmetallischen kristallwasserfreien Eisen(II)-Metall-Orthophosphate und -Pyrophosphate eignen sich, wie das vorgenannte Eisen(II)-Orthophosphat mit der Graftonit-Struktur, unter anderem besonders als Absorber für elektromagnetische Strahlung, insbesondere IR-Strahlung, und lassen sich zu diesem Zweck ebenfalls mit Vorteil in ein Trägermaterial, vorzugsweise in thermoplastische Polymere, einarbeiten.

Vorzugsweise wird in Stufe (c) erhaltene Material auf eine Partikelgröße (d50) < 150µm, bevorzugt < 30 µm, besnders bevorzugt < 4 µm eingestellt.

Die Erfindung wird nun anhand von Ausführungsbeispielen und der angefügten Figuren weiter erläutert.
- Figur 1: zeigt das Röntgendiffraktogramm von erfindungsgemäß nach Herstellungsbeispiel 1 hergestelltem kristallwasserfreiem Fe₂P₂O₇.
- Figur 2: zeigt das Röntgendiffraktogramm von erfindungsgemäß nach Herstellungsbeispiel 2 hergestelltem Phasengemisch von kristallwasserfreiem Mg_{1,5}Fe_{1,5}(PO₄)₂ und Fe₃(PO₄)₂.
- Figur 3: zeigt das Röntgendiffraktogramm von erfindungsgemäß nach Herstellungsbeispiel 3 hergestelltem kristallwasserfreiem Fe₃(PO₄)₂.
- Figur 4: zeigt das Röntgendiffraktogramm von erfindungsgemäß nach Herstellungsbeispiel 4 hergestelltem kristallwasserfreiem KFe(PO₄).
- Figur 5: zeigt das Röntgendiffraktogramm von erfindungsgemäß nach Herstellungsbeispiel 5 hergestelltem kristallwasserfreiem KFe_{0,90}Zn_{0,10}(PO₄).
- Figur 6: zeigt das Röntgendiffraktogramm von erfindungsgemäß nach Herstellungsbeispiel 6 hergestelltem kristallwasserfreiem KFe_{0,75}Zn_{0,25}(PO₄).
- Figur 7: zeigt das Röntgendiffraktogramm von erfindungsgemäß nach Herstellungsbeispiel 7 hergestelltem kristallwasserfreiem KFe_{0,75}Mn_{0,25}(PO₄).
- Figur 8: zeigt das Röntgendiffraktogramm von erfindungsgemäß nach Herstellungsbeispiel 8 hergestelltem kristallwasserfreiem BaFeP₂O₇.
- Figur 9: zeigt die Partikelgrößenverteilung von erfindungsgemäß nach Herstellungsbeispiel 3 hergestelltem kristallwasserfreiem Fe₃(PO₄)₂.

### BEISPIELE

### Röntgendiffraktometrie (XRD)

Von den gemäß den nachfolgenden Beispielen hergestellten Produkten wurden Röntgenbeugungsmessungen (XRD) an einem Diffraktometer des Typs D8 Advance A25 (Firma Bruker) unter Verwendung von CuKα-Strahlung durchgeführt.

Die Produkte und deren Kristallstrukturen wurden anhand entsprechender Referenzdiffraktogramme (Powder Diffraction Files; PDF) der Datenbank des ICDD (International Centre for Diffraction Data), vormals JCPDS (Joint Committee on Powder Diffraction Standards) identifiziert. Sofern für die hergestellten Produkte keine PDF-Karten zur Verfügung standen, wurden PDF-Karten isotyper Verbindungen (= Verbindungen vom gleichen Strukturtyp) verwendet.

### Elementaranalyse

Zur Ermittlung und Bestätigung der Stöchiometrien der hergestellten Produkte wurden Elementaranalysen mittels Röntgenfluoreszenzanalyse (XRF) unter Verwendung des Spektrometers Axios FAST (Firma PANalytical) durchgeführt.

### Partikelgrößenbestimmung

Zur Bestimmung der mittleren Korngrößen können vom Fachmann gängige Methoden wie Lichtstreuung oder mikroskopische Verfahren genutzt werden. Die hierin angegebenen erfindungsgemäßen mittleren Korngrößen (Partikelgrößen) wurden mit einem Laser-Teilchengrößenmessgerät (Modell LA-950V2 der Firma Horiba; Softwareversion 7.2) bestimmt.

### Herstellungsbeispiel 1 - kristallwasserfreies Fe₂P₂O₇

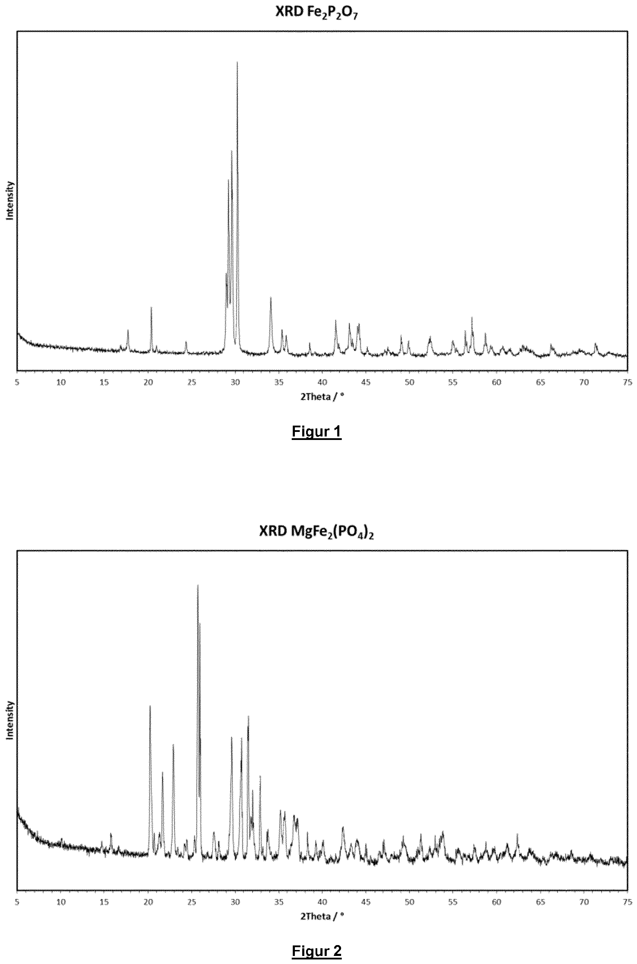

Eine Suspension aus
i) 35,5 kg Eisen(III)-Oxidhydroxid [FeO(OH) bzw. Fe₂O₃ 1H₂O],
ii) 16,5 kg 98%iger Phosphonsäure [H₃PO₃],
iii) 26,5 kg 75%iger Phosphorsäure [H₃PO₄] und
LM: 220 kg Wasser
wurde sprühgranuliert. Das so erhaltene Granulat wurde in einem Drehrohrofen bei einer mittleren Verweilzeit von 4 h unter Formiergasatmosphäre (5 Vol-% H₂ in N₂) bei 700°C temperaturbehandelt. Man erhielt ein fast farbloses bis zart rosafarbenes Produkt. Das Röntgendiffraktogramm (XRD) des Produkts ist in Figur 1 gezeigt. Das Produkt wurde anhand der PDF-Karte 01-072-1516 identifiziert.

### Herstellungsbeispiel 2 - Phasengemisch aus kristallwasserfreiem Mg_{1,5}Fe_{1,5}(PO₄)₂ und Fe₃(PO₄)₂

Eine Suspension aus
i) 8,45 kg Eisen(III)-Oxidhydroxid [FeO(OH) bzw. Fe₂O₃ 1H₂O],
ii) 7,95 kg 98%iger Phosphonsäure [H₃PO₃],
iii) 19,6 kg Eisen(III)-Phosphat-Dihydrat [FePO₄ 2H₂O],
iv) 8,43 kg Magnesiumcarbonat [MgCO₃] und
LM: 160 kg Wasser
wurde sprühgranuliert. Das so erhaltene Granulat wurde in einem Drehrohrofen bei einer mittleren Verweilzeit von 3 h unter Formiergasatmosphäre (5 Vol-% H₂ in N₂) bei 750°C temperaturbehandelt. Man erhielt ein fast farbloses Produkt. Das Röntgendiffraktogramm (XRD) des Produkts ist in Figur 2 gezeigt. Das Produkt wurde als anhand der PDF-Karten als ein Phasengemisch aus einer Hauptphase Mg_{1,5}Fe_{1,5}(PO₄)₂ (PDF-Karte 01-071-6793) und einer Nebenphase Fe₃(PO₄)₂ (PDF-Karte 00-49-1087) identifiziert.

### Herstellungsbeispiel 3 - kristallwasserfreies Fe₃(PO₄)₂

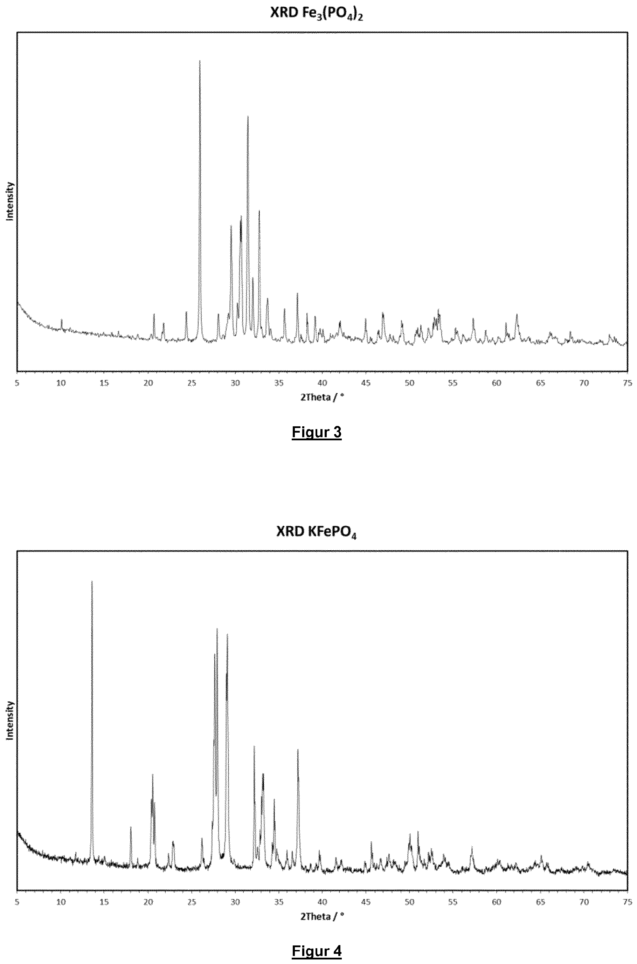

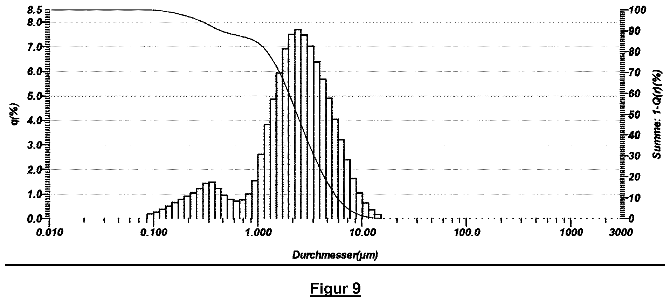

Eine Suspension aus
i) 21,75 kg Eisen(III)-Oxidhydroxid [FeO(OH) bzw. Fe₂O₃ 1H₂O],
ii) 12,15 kg 98%iger Phosphonsäure [H₃PO₃],
iii) 10,3 kg Eisen(III)-Phosphat-Dihydrat [FePO₄ 2H₂O] und
LM: 140 kg Wasser
wurde sprühgranuliert. Das so erhaltene Granulat wurde in einem Drehrohrofen bei einer mittleren Verweilzeit von 90 Minuten unter Formiergasatmosphäre (5 Vol-% H₂ in N₂) bei 750°C temperaturbehandelt. Man erhielt ein fast farbloses Produkt. Das Röntgendiffraktogramm (XRD) des Produkts ist in Figur 3 gezeigt. Das Produkt kristallisiert in der Graftonit-Struktur und wurde anhand der PDF-Karte 00-49-1087 identifiziert. Das Produkt wurde derart vermahlen, dass 50 Gew.-% des Produkts eine Teilchengröße von weniger als 3 µm hatten. Die Partikelgrößenverteilung des gemahlenen Produkts ist in Figur 9 gezeigt.

### Herstellungsbeispiel 4 - Herstellung von kristallwasserfreies KFe(PO₄)

Eine Suspension aus
i) 11,80 kg Eisen(III)-Oxidhydroxid [FeO(OH) bzw. Fe₂O₃ 1H₂O],
ii) 10,70 kg 98%iger Phosphonsäure [H₃PO₃],
iii) 24,8 kg Eisen(III)-Phosphat-Dihydrat [FePO₄ 2H₂O]
IV) 29,8 kg 50%iger Kalilauge [KOH]
V) 1,0 kg 75%iger Phosphorsäure [H₃PO₄] und
LM: 110 kg Wasser
wurde sprühgranuliert. Das so erhaltene Granulat wurde in einem Drehrohrofen bei einer mittleren Verweilzeit von 3 h unter Formiergasatmosphäre (5 Vol-% H₂ in N₂) bei 650°C temperaturbehandelt. Man erhielt ein blass hellgrünes Produkt. Das Röntgendiffraktogramm (XRD) des Produkts ist in Figur 4 gezeigt. Das Produkt wurde anhand der PDF-Karte 01-076-4615 identifiziert.

### Herstellungsbeispiel 5 - kristallwasserfreies KF_{e0,90}Zn_{0,10}(PO₄)

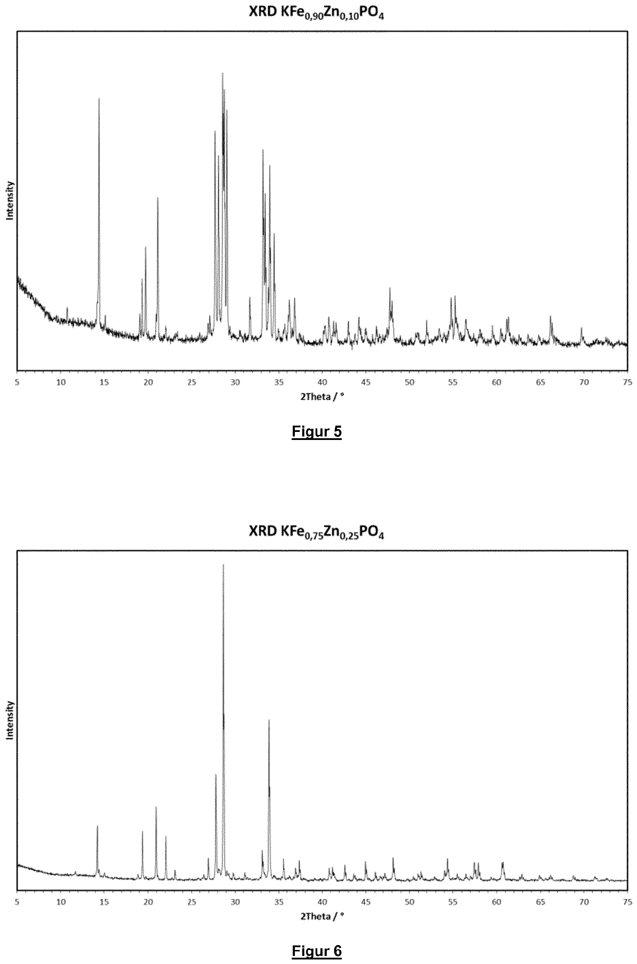

Eine Suspension aus
i) 10,60 kg Eisen(III)-Oxidhydroxid [FeO(OH) bzw. Fe₂O₃ 1H₂O],
ii) 9,65 kg 98%iger Phosphonsäure [H₃PO₃],
iii) 22,30 kg Eisen(III)-Phosphat-Dihydrat [FePO₄ 2H₂O]
IV) 2,15 kg Zinkoxid [ZnO]
IV) 29,8 kg 50%iger Kalilauge [KOH]
V) 4,15 kg 75%iger Phosphorsäure [H₃PO₄] und
LM: 120 kg Wasser
wurde sprühgranuliert. Das so erhaltene Granulat wurde in einem Drehrohrofen bei einer mittleren Verweilzeit von 2 h unter Formiergasatmosphäre (5 Vol-% H₂ in N₂) bei 600°C temperaturbehandelt. Man erhielt ein hellgraues Produkt. Das Röntgendiffraktogramm (XRD) des Produkts ist in Figur 5 gezeigt. Bei dem Produkt handelt es sich um einen neuen Strukturtyp, der mit der KFe(PO₄)-Struktur gemäß PDF-Karte 01-076-4615 eng verwandt zu sein scheint.

### Herstellungsbeispiel 6 - kristallwasserfreies KF_{e0,75}Zn_{0,25}(PO₄)

Eine Suspension aus
i) 8,85 kg Eisen(III)-Oxidhydroxid [FeO(OH) bzw. Fe₂O₃ 1H₂O],
ii) 8,05 kg 98%iger Phosphonsäure [H₃PO₃],
iii) 18,60 kg Eisen(III)-Phosphat-Dihydrat [FePO₄ 2H₂O]
IV) 5,40 kg Zinkoxid [ZnO]
IV) 29,8 kg 50%iger Kalilauge [KOH]
V) 9,30 kg 75%iger Phosphorsäure [H₃PO₄] und
LM: 120 kg Wasser
wurde sprühgranuliert. Das so erhaltene Granulat wurde in einem Drehrohrofen bei einer mittleren Verweilzeit von 2 h unter Formiergasatmosphäre (5 Vol-% H₂ in N₂) bei 600°C temperaturbehandelt. Man erhielt ein hellgraues Produkt. Das Röntgendiffraktogramm (XRD) des Produkts ist in Figur 6 gezeigt. Das Produkt ist nicht aus der Literatur bekannt. Es kristallisiert isotyp zu KZn(PO₄) gemäß PDF-Karte 01-081-1034.

### Herstellungsbeispiel 7 - kristallwasserfreies KFe_{0,75}Mn_{0,25}(PO₄)

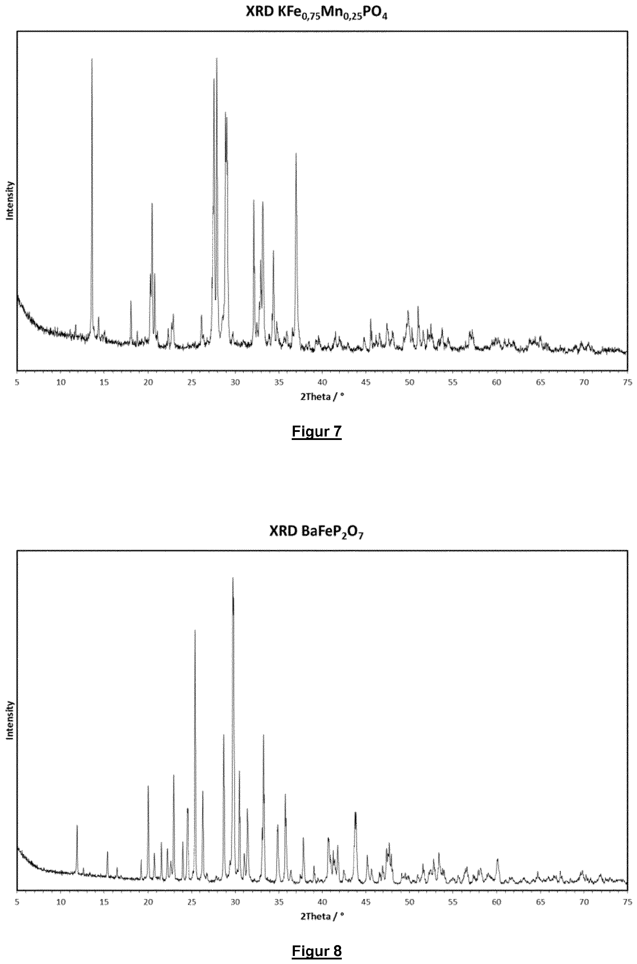

Eine Suspension aus
i) 8,85 kg Eisen(III)-Oxidhydroxid [FeO(OH) bzw. Fe₂O₃ 1H₂O],
ii) 8,05 kg 98%iger Phosphonsäure [H₃PO₃],
iii) 18,60 kg Eisen(III)-Phosphat-Dihydrat [FePO₄ 2H₂O]
IV) 8,85 kg Mangancarbonat-Hydrat [MnCO₃ H₂O]
IV) 29,8 kg 50%iger Kalilauge [KOH]
V) 9,30 kg 75%iger Phosphorsäure [H₃PO₄] und
LM: 140 kg Wasser
wurde sprühgranuliert. Das so erhaltene Granulat wurde in einem Drehrohrofen bei einer mittleren Verweilzeit von 2 h unter Formiergasatmosphäre (5 Vol-% H₂ in N₂) bei 600°C temperaturbehandelt. Man erhielt ein hellgraues Produkt. Das Röntgendiffraktogramm (XRD) des Produkts ist in Figur 7 gezeigt. Das Produkt ist nicht aus der Literatur bekannt. Es kristallisiert isotyp zu KFe(PO₄) gemäß PDF-Karte 01-076-4615.

### Herstellungsbeispiel 8 - kristallwasserfreies BaFeP₂O₇

Eine Suspension aus
i) 8,70 kg Eisen(III)-Oxidhydroxid [FeO(OH) bzw. Fe₂O₃ 1H₂O],
ii) 8,20 kg 98%iger Phosphonsäure [H₃PO₃],
iii) 19,05 kg Eisen(III)-Phosphat-Dihydrat [FePO₄ 2H₂O]
IV) 63,09 kg Bariumhydroxid-Oktahydrat [Ba(OH)₂ 8H₂O]
V) 26,15 kg 75%iger Phosphorsäure [H₃PO₄] und
LM: 250 kg Wasser
wurde sprühgranuliert. Das so erhaltene Granulat wurde in einem Drehrohrofen bei einer mittleren Verweilzeit von 4 h unter Formiergasatmosphäre (5 Vol-% H₂ in N₂) bei 800°C temperaturbehandelt. Man erhielt ein hellgraues Produkt. Das Röntgendiffraktogramm (XRD) des Produkts ist in Figur 8 gezeigt. Das Produkt kristallisiert isotyp zu BaCoP₂O₇ gemäß PDF-Karte 01-084-1833.

## Patentansprüche

1. Verfahren zur Herstellung von
- kristallwasserfreiem Eisen(II)-Orthophosphat der allgemeinen Formel Fe₃(PO₄)₂ oder
- kristallwasserfreiem Eisen(II)-Metall-Orthophosphat, Eisen(II)-Metall-Pyrophosphat oder Eisen(II)-Metall-Metaphosphat der allgemeinen Formel FeₐMet_{b}(PO_{c})_{d}, worin a eine Zahl von 1 bis 5 ist, b eine Zahl von >0 bis 5 ist, c eine Zahl von 2,5 bis 5 ist, d eine Zahl von 0,5 bis 3 ist und wobei Met ein oder mehrere Metalle repräsentiert, ausgewählt aus der Gruppe, bestehend aus K, Rb, Cs, Mg, Ca, Sr, Ba, den Übergangsmetallen (d-Block), insbesondere Sc, Y, La, Ti, Zr, Hf, Nb, Ta, Cr, Mo, W, Mn, Cu, Zn, sowie den Metallen und Halbmetallen der dritten, vierten und fünften Hauptgruppe, insbesondere B, Al, Ga, In, Si, Sn, Sb, Bi, und den Lanthanoiden,
oder Kombinationen der vorgenannten Phosphate
mit den Stufen:
a) Herstellen eines Gemisches, enthaltend:
i) Eisenverbindung (A), ausgewählt unter Fe(III)-Verbindungen, Fe(III)/Fe(II)-Verbindungen und Gemischen davon, in einem Anteil von 20 bis 90 Gew.-% des Gemisches, ausgewählt aus der Gruppe bestehend aus Oxiden, Hydroxiden, Oxidhydroxiden, Carbonaten, Carboxylaten wie Oxalaten, Formiaten, Acetaten, Citraten, Lactaten, Orthophosphaten, Phosphonaten, Metaphosphaten, Pyrophosphaten, Sulfaten und Gemischen der vorgenannten,
ii) Reduktionsmittel (B) in einem Anteil von 5 bis 50 Gew.-% des Gemisches, ausgewählt aus der Gruppe, bestehend aus Phosphonsäure [H₃PO₃], Phosphortrioxid [P₂O₃], Phosphinsäure [H₃PO₂], Phosphortetraoxid [P₂O₄], Hypodiphosphorsäure [H₄P₂O₆], Diphosphonsäure [H₄P₂O₅], Hypodiphosphonsäure [H₄P₂O₄], Fe-Salzen und Met-Salzen der vorgenannten Säuren und Gemischen der vorgenannten, als Feststoffe oder wässrige Lösung oder Suspension,
iii) optional Phosphatdonor (C) in einem Anteil von 0 bis 50 Gew.-% des Gemisches, ausgewählt unter Phosphorsäure [H₃PO₄] als wässrige Lösung, Metallphosphat [Metₓ(PO₄)_{z}] oder saures Metallphosphat [MetₓH_{Y}(PO₄)_{z}] mit 1≥x≥4, 1≥y≥5 und 1≥z≥4 als Feststoff oder wässrige Lösung oder Suspension, Diphosphorsäure [H₄P₂O₇], Metaphosphorsäure [(HPO₃)ₙ] mit n≥3 oder deren Salze, Phosphorpentoxid [P₂O₅] oder Gemische der vorgenannten, wobei Met wie oben definiert ist,
iv) optional Metal (Met)-Donor (D) in einem Anteil von 0 bis 50 Gew.-% des Gemisches, ausgewählt unter Metallverbindungen von einem oder mehreren Metallen aus der Gruppe, bestehend aus K, Rb, Cs, Mg, Ca, Sr, Ba, den Übergangsmetallen (d-Block), insbesondere Sc, Y, La, Ti, Zr, Hf, Nb, Ta, Cr, Mo, W, Mn, Cu, Zn, sowie den Metallen und Halbmetallen der dritten, vierten und fünften Hauptgruppe, insbesondere B, Al, Ga, In, Si, Sn, Sb, Bi, und den Lanthanoiden, und ausgewählt unter Oxiden, Hydroxiden, Oxidhydroxiden, Carbonaten, Oxalaten, Formiaten, Acetaten, Citraten, Lactaten, Orthophosphaten, Pyrophosphaten und Sulfaten der vorgenannten Metalle und Gemischen davon,
wobei sich die Gewichtsanteile der Bestandteile (A) bis (D) des Gemisches auf die Anteile der Stoffe ohne Lösungsmittel und/oder Suspendiermittel beziehen,
b) das erhaltene Gemisch, sofern wässriges und/oder organisches Lösungsmittel enthalten ist, bei einer Temperatur von weniger als 400°C trocknet,
c) das trockene oder getrocknete Gemisch bei einer Temperatur im Bereich von 400 bis 1200°C behandelt.

2. Verfahren nach einem der vorausgehenden Ansprüche, **dadurch gekennzeichnet, dass** das Trocknen in Stufe b) durch konvektives Trocknen, bevorzugt durch Sprühtrocknen, bei einer Temperatur im Bereich von 100 bis 400°C, vorzugsweise im Bereich von 110 bis 350°C, besonders bevorzugt im Bereich von 150 bis 270°C erfolgt.

3. Verfahren nach einem der vorausgehenden Ansprüche, **dadurch gekennzeichnet, dass** man die Temperaturbehandlung in Stufe c) unter Inertgasatmosphäre oder reduzierender Gasatmosphäre, vorzugweise in Formiergasatmosphäre mit ≤ 5 Vol-% H₂ in N₂ oder in Edelgasatmosphäre durchführt.

4. Verfahren nach einem der vorausgehenden Ansprüche, **dadurch gekennzeichnet, dass** man die Temperaturbehandlung in Stufe c) im Drehrohrofen durchführt.

5. Verfahren nach einem der vorausgehenden Ansprüche, **dadurch gekennzeichnet, dass** man die Temperaturbehandlung in Stufe c) bei einer Temperatur im Bereich von 500 bis 1100°C, bevorzugt im Bereich von 600 bis 1000°C, besonders bevorzugt von 700 bis 800°C durchführt.

6. Verfahren nach einem der vorausgehenden Ansprüche, **dadurch gekennzeichnet, dass** das Eisen(II)-Phosphat kristallwasserfreies Eisen(II)-Orthophosphat der allgemeinen Formel Fe₃(PO₄)₂ ist und die Graftonit-Kristallstruktur aufweist.

7. Verfahren nach einem der Ansprüche 1 bis 5, **dadurch gekennzeichnet, dass** das Eisen(II)-Phosphat gemischtmetallisches kristallwasserfreies Eisen(II)-Metall-Orthophosphat der allgemeinen Formel FeₐMet_{b}(PO_{c})_{d} ist, wobei Met eines oder eine Kombination der Metalle Kalium (K), Magnesium (Mg) und Zink (Zn) repräsentiert, vorzugsweise Kalium (K) alleine oder in Kombination mit entweder Magnesium (Mg) oder Zink (Zn), wobei das Eisen(II)-Metall-Orthophosphat besonders bevorzugt KFePO₄, K(Fₑ₀,₉₀Zn_{0,10})PO₄, K(F_{e0,75}Mn_{0,25})PO₄, K(Fe₀,₇₅Zn_{0,25})PO₄ oder K(Fe_{0,75}M_{90,25})PO₄ ist.

8. Verfahren nach einem der Ansprüche 1 bis 5, **dadurch gekennzeichnet, dass** das Eisen(II)-Phosphat gemischtmetallisches kristallwasserfreies Eisen(II)-Metall-Pyrophosphat der allgemeinen Formel FeₐMet_{b}(P₂O₇)_{d} ist, wobei Met eines oder eine Kombination der Metalle Calcium (Ca), Strontium (Sr) und Barium (Ba) repräsentiert, wobei das Eisen(II)-Metall- Pyrophosphat besonders bevorzugt CaFeP₂O₇, SrFeP₂O₇ oder BaFeP₂O₇ ist.

9. Verfahren nach einem der vorausgehenden Ansprüche, **dadurch gekennzeichnet, dass** die als Eisenverbindung (A) eingesetzten Fe(III)- und/oder Fe(III)/Fe(II)-Verbindungen unter Oxiden, Oxidhydroxiden, Hydroxiden, Orthophosphaten, Pyrophosphaten, Metaphosphaten und Sulfaten ausgewählt sind.

10. Verfahren nach einem der vorausgehenden Ansprüche, **dadurch gekennzeichnet, dass** das nach der Temperaturbehandlung in Stufe c) erhaltene Produkt in seiner Partikelgröße eingestellt wird, bevorzugt auf eine Partikelgröße (d50) < 150 µm, besonders bevorzugt (d50) < 30 µm, ganz besonders bevorzugt (d50) < 4 µm.

## Claims

1. A process for the production of
- iron(II) orthophosphate which is free from water of crystallisation, with general formula Fe₃(PO₄)₂, or
- iron(II)-metal orthophosphate, iron(II)-metal pyrophosphate or iron(II)-metal metaphosphate which is free from water of crystallisation, with general formula FeₐMet_{b}(PO_{c})_{d,} in which a is a number from 1 to 5, b is a number from > 0 to 5, c is a number from 2.5 to 5, d is a number from 0.5 to 3 and wherein Met represents one or more metals selected from the group consisting of K, Rb, Cs, Mg, Ca, Sr, Ba, the transition metals (d block), in particular Sc, Y, La, Ti, Zr, Hf, Nb, Ta, Cr, Mo, W, Mn, Cu, Zn, as well as the metals and metalloids of the third, fourth and fifth main groups, in particular B, Al, Ga, In, Si, Sn, Sb, Bi and the lanthanoids,
or combinations of said phosphates,
with the steps of:
a) producing a mixture containing:
i) an iron compound (A) selected from Fe(III) compounds, Fe(III)/Fe(II) compounds and mixtures thereof in a proportion of 20% to 90% by weight of the mixture, selected from the group consisting of oxides, hydroxides, oxide hydroxides, carbonates, carboxylates such as oxalates, formates, acetates, citrates, lactates, orthophosphates, phosphonates, metaphosphates, pyrophosphates, sulphates and mixtures thereo f,
ii) a reducing agent (B) in a proportion of 5% to 50% by weight of the mixture, selected from the group consisting of phosphonic acid [H₃PO₃], phosphorus trioxide [P₂O₃], phosphinic acid [H₃PO₂], phosphorus tetroxide [P₂O₄], hypodiphosphoric acid [H₄P₂O₆], diphosphonic acid [H₄P₂O₅], hypodiphosphonic acid [H₄P₂O₄], Fe salts and Met salts of said acids and mixtures thereof, as a solid, aqueous solution or suspension,
iii) optionally, a phosphate donor (C) in a proportion of 0 to 50% by weight of the mixture, selected from phosphoric acid [H₃PO₄] as an aqueous solution, metal phosphate [Metₓ(PO₄)_{z}] or acid metal phosphate [MetₓH_{y}(PO₄)_{z}] with 1 ≥ x ≥ 4, 1 ≥ y ≥ 5 and 1 ≥ z ≥ 4, as a solid or aqueous solution or suspension, diphosphoric acid [H₄P₂O₇], metaphosphoric acid [(HPO₃)ₙ] with n ≥ 3, or their salts, phosphorus pentoxide [P₂O₅] or mixtures thereof, wherein Met is as defined above,
iv) optionally, a donor (D) metal (Met) in a proportion of 0 to 50% by weight of the mixture, selected from metal compounds of one or more metals from the group consisting of K, Rb, Cs, Mg, Ca, Sr, Ba, the transition metals (d block), in particular Sc, Y, La, Ti, Zr, Hf, Nb, Ta, Cr, Mo, W, Mn, Cu, Zn, as well as the metals and metalloids of the third, fourth and fifth main groups, in particular B, Al, Ga, In, Si, Sn, Sb, Bi and the lanthanoids, and selected from oxides, hydroxides, oxide hydroxides, carbonates, oxalates, formates, acetates, citrates, lactates, orthophosphates, pyrophosphates and sulphates of said metals and mixtures thereof, wherein the proportion by weight of components (A) to (D) of the mixture is based on the proportions of the substances without the solvent and/or suspension agent,
b) in the case in which it contains aqueous and/or organic solvents, drying the mixture obtained at a temperature of less than 400°C,
c) treating the dry or dried mixture at a temperature in the range from 400°C to 1200°C.

2. The process as claimed in one of the preceding claims, **characterized in that** the drying in step b) is carried out by convective drying, preferably spray drying, at a temperature in the range 100°C to 400°C, preferably in the range 110°C to 350°C, particularly preferably in the range 150°C to 270°C.

3. The process as claimed in one of the preceding claims, **characterized in that** the temperature treatment in step c) is carried out in an inert gas atmosphere or reducing gas atmosphere, preferably in a forming gas atmosphere with ≤ 5% by volume of H₂ in N₂ or in a noble gas atmosphere.

4. The process as claimed in one of the preceding claims, **characterized in that** the temperature treatment in step c) is carried out in a rotary kiln.

5. The process as claimed in one of the preceding claims, **characterized in that** the temperature treatment in step c) is carried out at a temperature in the range 500°C to 1100°C, preferably in the range 600°C to 1000°C, particularly preferably in the range 700°C to 800°C.

6. The process as claimed in one of the preceding claims, **characterized in that** the iron(II) phosphate which is free from water of crystallisation is iron(II) orthophosphate with general formula Fe₃(PO₄)₂ and has the crystal structure of graftonite.

7. The process as claimed in one of claims 1 to 5, **characterized in that** the iron(II) phosphate is a mixed metal iron(II)-metal orthophosphate which is free from water of crystallisation and has general formula FeₐMet_{b}(PO_{c})_{d}, wherein Met represents one or a combination of the metals potassium (K), magnesium (Mg) and zinc (Zn), preferably potassium (K) alone or in combination with either magnesium (Mg) or zinc (Zn), wherein particularly preferably, the iron(II)-metal orthophosphate is KFePO₄, K(Fe_{0.90}Zn_{0.10})PO₄, K(Fe_{0.75}Mn_{0.25})PO₄, K(Fe_{0.75}Zn_{0.25})PO₄ or K(Fe_{0.75}Mg_{0.25})PO₄.

8. The process as claimed in one of claims 1 to 5, **characterized in that** the iron(II) phosphate is a mixed metal iron(II)-metal pyrophosphate which is free from water of crystallisation and has general formula FeₐMet_{b}(P₂O₇)_{d}, wherein Met represents one or a combination of the metals calcium (Ca), strontium (Sr) and barium (Ba), wherein particularly preferably, the iron(II)-metal pyrophosphate is CaFeP₂O₇, SrFeP₂O₇ or BaFeP₂O₇.

9. The process as claimed in one of the preceding claims, **characterized in that** the Fe(III) and/or Fe(III)/Fe(II) compounds used as the iron compound (A) are selected from oxides, oxide hydroxides, hydroxides, orthophosphates, pyrophosphates, metaphosphates and sulphates.

10. The process as claimed in one of the preceding claims, **characterized in that** the product obtained after the temperature treatment in step c) is adjusted in terms of particle size, preferably to a particle size (d50) < 150 µm, particularly preferably (d50) < 30 µm, more particularly preferably (d50) < 4 µm.

## Revendications

1. Procédé de production
- d'orthophosphate de fer (II) anhydre de formule générale Fe₃(PO₄)₂, ou
- d'orthophosphate métallique de fer (II), de pyrophosphate métallique de fer (II) ou de métaphosphate métallique de fer (II) anhydre de formule générale FeₐMet_{b}(PO_{c})_{d}, dans laquelle a est un nombre compris entre 1 et 5, b est un nombre compris entre > 0 et 5, c est un nombre compris entre 2,5 et 5, d est un nombre compris entre 0,5 et 3, et dans laquelle Met représente un ou plusieurs métaux choisis dans le groupe comprenant K, Rb, Cs, Mg, Ca, Sr, Ba, les métaux de transition (bloc d), en particulier Sc, Y, La, Ti, Zr, Hf, Nb, Ta, Cr, Mo, W, Mn, Cu, Zn, ainsi que les métaux et semi-métaux des troisième, quatrième et cinquième groupes principaux, en particulier B, Al, Ga, In, Si, Sn, Sb, Bi et les lanthanides,
ou de combinaisons des phosphates mentionnés ci-avant, comportant les étapes suivantes consistant à :
a) préparer un mélange contenant :
i) un composé de fer (A) choisi parmi des composés Fe(III), des composés Fe(III)/Fe(II) et des mélanges de ceux-ci, selon une proportion de 20 à 90 % en poids du mélange, choisi dans le groupe comprenant des oxydes, des hydroxydes, des oxyhydroxydes, des carbonates, des carboxylates tels que des oxalates, des formates, des acétates, des citrates, des lactates, des orthophosphates, des phosphonates, des métaphosphates, des pyrophosphates, des sulfates et des mélanges de ceux-ci,
ii) un agent réducteur (B) selon une proportion de 5 à 50 % en poids du mélange, choisi dans le groupe composé de l'acide phosphonique [H₃PO₃], du trioxyde de phosphore [P₂O₃], de l'acide phosphinique [H₃PO₂], du tétraoxyde de phosphore [P₂O₄], de l'acide hypodiphosphorique [H₄P₂O₆], de l'acide diphosphonique [H₄P₂O₅], de l'acide hypodiphosphonique [H₄P₂O₄], des sels de Fe et des sels de Met des acides mentionnés ci-avant et des mélanges des éléments mentionnés ci-avant, sous forme de solides ou de solution ou suspension aqueuse,
iii) facultativement un donneur de phosphate (C) selon une proportion de 0 à 50 % en poids du mélange, choisi parmi l'acide phosphorique [H₃PO₄] sous forme de solution aqueuse, le phosphate métallique [Metₓ(PO₄)_{z}] ou le phosphate métallique acide [MetₓH_{y}(PO₄)_{z}] avec 1 ≥ x ≥ 4, 1 ≥ y ≥ 5 et 1 ≥ z ≥ 4 sous forme de solides ou de solution ou suspension aqueuse, l'acide diphosphorique [H₄P₂O₇], l'acide métaphosphorique [(HPO₃)ₙ] avec n ≥ 3 ou des sels de ceux-ci, le pentoxyde de phosphore [P₂O₅] ou des mélanges des éléments mentionnés ci-avant, Met étant tel que défini ci-avant,
iv) facultativement un donneur de métal (Met) (D) selon une proportion de 0 à 50 % en poids du mélange, choisi parmi des composés métalliques d'un ou plusieurs métaux du groupe comprenant K, Rb, Cs, Mg, Ca, Sr, Ba, les métaux de transition (bloc d), en particulier Sc, Y, La, Ti, Zr, Hf, Nb, Ta, Cr, Mo, W, Mn, Cu, Zn, ainsi que les métaux et semi-métaux des troisième, quatrième et cinquième groupes principaux, en particulier B, Al, Ga, In, Si, Sn, Sb, Bi, et les lanthanides, et choisi parmi des oxydes, des hydroxydes, des oxyhydroxydes, des carbonates, des oxalates, des formates, des acétates, des citrates, des lactates, des orthophosphates, des pyrophosphates et des sulfates des métaux mentionnés ci-avant et des mélanges de ceux-ci,
où les proportions en poids des constituants (A) à (D) du mélange se rapportent aux proportions des matières sans solvant et/ou milieu de suspension,
b) sécher le mélange obtenu, s'il contient un solvant aqueux et/ou organique, à une température inférieure à 400 °C,
c) traiter le mélange sec ou séché à une température comprise dans la plage de 400 à 1 200 °C.

2. Procédé selon l'une des revendications précédentes, **caractérisé en ce que** le séchage à l'étape b) se fait par séchage par convection, de préférence par séchage par atomisation, à une température dans la plage de 100 à 400 °C, de préférence dans la plage de 110 à 350 °C, de manière particulièrement préférée dans la plage de 150 à 270 °C.

3. Procédé selon l'une des revendications précédentes, **caractérisé en ce que** le traitement thermique de l'étape c) est réalisé sous atmosphère de gaz inerte ou de gaz réducteur, de préférence dans une atmosphère de mélange gazeux hydrogène-azote avec ≤ 5 % en volume de H₂ dans du N₂ ou dans une atmosphère de gaz rare.

4. Procédé selon l'une des revendications précédentes, **caractérisé en ce que** le traitement thermique de l'étape c) est réalisé dans un four tubulaire rotatif.

5. Procédé selon l'une des revendications précédentes, **caractérisé en ce que** le traitement thermique de l'étape c) est réalisé à une température dans la plage de 500 à 1 100 °C, de préférence dans la plage de 600 à 1 000 °C, de manière particulièrement préférée comprise entre 700 et 800 °C.

6. Procédé selon l'une des revendications précédentes, **caractérisé en ce que** le phosphate de fer (II) est de l'orthophosphate de fer (II) anhydre de formule générale Fe₃(PO₄)₂ et présente la structure cristalline de graftonite.

7. Procédé selon l'une des revendications 1 à 5, **caractérisé en ce que** le phosphate de fer (II) est un orthophosphate métallique de fer (II) anhydre de métaux mélangés de formule générale FeₐMet_{b}(PO_{c})_{d}, dans laquelle Met représente un ou une combinaison des métaux potassium (K), magnésium (Mg) et zinc (Zn), de préférence le potassium (K) seul ou en combinaison avec du magnésium (Mg) ou du zinc (Zn), dans laquelle l'orthophosphate métallique de fer (II) est de manière particulièrement préférée KFePO₄, K(Fe_{0,90}Zn_{0,10})PO₄, K(Fe_{0,75}Mn_{0,25})PO₄, K(Fe_{0,75}Zn_{0,25})PO₄ ou K(Fe_{0,75}Mg_{0,25})PO₄.

8. Procédé selon l'une des revendications 1 à 5, **caractérisé en ce que** le phosphate de fer (II) est du pyrophosphate métallique de fer (II) anhydre de métaux mélangés de formule générale FeₐMet_{b}(P₂O₇)_{d}, dans laquelle Met est un ou une combinaison des métaux calcium (Ca), strontium (Sr) et baryum (Ba), dans laquelle le pyrophosphate métallique de fer (II) est de manière particulièrement préférée CaFeP₂O_{7,} SrFeP₂O₇ ou BaFeP₂O₇.

9. Procédé selon l'une des revendications précédentes, **caractérisé en ce que** les composés Fe(III) et/ou Fe(III)/Fe(II) utilisés comme composé du fer (A) sont choisis parmi des oxydes, des oxyhydroxydes, des hydroxydes, des orthophosphates, des pyrophosphates, des métaphosphates et des sulfates.

10. Procédé selon l'une des revendications précédentes, **caractérisé en ce que** le produit obtenu après le traitement thermique à l'étape c) est ajusté concernant sa granulométrie, de préférence à une granulométrie (d50) < 150 µm, de manière particulièrement préférée (d50) < 30 µm, de manière tout particulièrement préférée (d50) < 4 µm.
